# FASCICULE DE BREVET EUROPEEN

(11) **EP 0 983 929 B1**
(45) Date de publication et mention de la délivrance du brevet: **05.03.2003**
(21) Numéro de dépôt: 99116012.8
(22) Date de dépôt: 14.08.1999
(51) Int. Cl.: B62D 15/02

(54) **Capteur d'angle absolue entrainé par une couronne liée au volant**
Vom Kronrad einer Lenksaüle getriebener absoluter Drehgeber
Absolute angle sensor driven by a crown gear fixed on a steering column

(30) Priorité: 03.09.1998 FR 9811010
(43) Date de publication de la demande: 08.03.2000
(73) Titulaire: Valeo Electronique, 94042 Créteil (FR)
(72) Inventeur: Le Toumelin, Rémi, 77400 Lagny (FR)
(74) Mandataire: Lemaire, Marc

(56) Documents cités:
- EP-A- 0 386 439
- DE-A- 19 607 421
- GB-A- 2 316 921

## Description

L'invention concerne un capteur d'angle absolu de la rotation du volant d'un véhicule comportant un dispositif de comptage des tours du volant et un dispositif de mesure de l'angle du volant dans un tour, qui délivrent des informations sur la position du volant dès la mise sous tension du véhicule, lesdits dispositifs comportant un organe d'entrée entraîné en rotation par une couronne dentée solidaire du volant ou de l'arbre de direction. Un capteur d'angle de ce type est décrit dans EP 0 386 439.

Les informations délivrées par le dispositif du comptage de tours et le dispositif de mesure de l'angle du volant dans un tour permettent de calculer l'angle de rotation des roues directrices du véhicule. Ces informations envoyées à un calculateur permettent à ce dernier d'agir sur l'une au moins des liaisons au sol du véhicule, telles que la suspension, le freinage et/ou la traction.

Les capteurs d'angle de volant existant actuellement sont du type traversant ou à arbre creux. C'est-à-dire que ces capteurs comportent un orifice traversant pour leur montage sur le tube de colonne, à travers lequel, la couronne dentée solidaire du volant ou de l'arbre de direction vient assurer l'entraînement en rotation du dispositif de comptage des tours du volant et du dispositif de mesure de l'angle du volant dans un tour. Cette disposition entraîne de nombreuses difficultés.

En effet, lorsque le capteur est disposé en haut de la colonne de direction, il nécessite un encombrement axial qui n'est pas toujours disponible.

Lorsqu'on dispose le capteur en bas de la colonne de direction, des modifications de colonne sont nécessaires. Ces modifications affectent la résistance aux chocs de la colonne et il est nécessaire de procéder à de nouveaux essais.

En outre, les montages et démontages du capteur sont malaisés et coûteux, notamment en cas de remplacement par suite d'avarie.

Le but de l'invention est de pallier ces inconvénients.

L'invention atteint son but par le fait que dans le capteur proposé:
le dispositif de comptage des tours du volant et le dispositif de mesure de l'angle du volant sont logés dans un boîtier susceptible d'être monté sur le bloc haut de colonne de direction dudit véhicule parallèlement à l'arbre de direction,
l'organe d'entrée comporte un arbre monté rotatif dans le boîtier et présentant, à l'extérieur dudit boîtier, un pignon conique apte à engrener avec la couronne dentée, également conique, et, à l'intérieur dudit boîtier, un pignon droit,
le dispositif de mesure de l'angle du volant comporte un moyeu monté rotatif dans ledit boîtier et engrenant avec ledit pignon droit par une denture, un disque codé lié en rotation audit moyeu et des détecteurs pour la lecture du disque codé, et
le dispositif de comptage des tours comporte un élément mobile déplacé par la rotation dudit moyeu, une plaque codée solidaire de l'élément mobile et des détecteurs pour la lecture de la plaque codée.

Grâce à cette structure, le capteur peut être monté et déposé à volonté sans dépose du volant et de la couronne dentée. Les interventions pour le montage ou le rechange du capteur peuvent ainsi être réalisés au moindre coût et de manière simple par du personnel peu qualifié.

Avantageusement, pour s'affranchir des défauts de concentricité de la couronne dentée, l'arbre est monté sur le boîtier avec interposition d'un dispositif de rattrapage de jeux. Le dispositif de rattrapage de jeux comporte un plongeur chargé par un ressort et logeant dans l'alésage d'un tourillon formé dans le boîtier et servant de guidage en rotation à l'arbre. Le pignon droit a une épaisseur supérieure à l'épaisseur de la denture du moyeu.

Le montage du capteur sur le véhicule se faisant lorsque les roues directrices sont dans la position "roues droites", il est prévu que le capteur comporte en outre un dispositif de verrouillage susceptible de bloquer l'élément mobile et le moyeu dans la position correspondant à "roues droites", lorsque le boîtier est désolidarisé du bloc haut de colonne. Le dispositif de verrouillage comporte un doigt chargé par un ressort dont une extrémité est susceptible de sortir du boîtier par une surface normalement en contact avec le bloc haut de colonne, ce doigt comportant une dent de crémaillère venant bloquer le moyeu et un ergot s'engageant dans une encoche pratiquée dans l'élément mobile.

Les avantageuses dispositions suivantes sont en outre adoptées :
- l'élément mobile du dispositif de comptage des tours du volant comporte un chariot monté coulissant dans le boîtier dans le sens radial du moyeu, ce chariot portant un pointeau coopérant avec une rainure en spirale ménagée sur une face du moyeu ;
- la plaque codée est interposée entre un ensemble de trois phototransistors et un prisme éclairé par 1 LED et ayant trois facettes réfléchissantes disposées en regard des phototransistors dans une direction perpendiculaire aux directions de déplacement du chariot, ladite plaque codée comportant des ouvertures et des parties opaques, afin de permettre de différencier huit seçteurs de rotation du volant ;
- le disque codé est en matière transparente et est éclairé par la tranche par au moins 1 LED, ledit disque comportant sur l'une de ses faces des sillons concentriques définissant des surfaces réfléchissant la lumière reçue vers l'autre face du disque, cette autre face comportant des zones laissant passer la lumière et des zones opaques ;
- les détecteurs sont des phototransistors disposés dans le trajet des flux lumineux réfléchis par les surfaces réfléchissantes, et un collimateur fixe est interposé entre le disque et les phototransistors ; et
- la tranche du disque est éclairée par deux LED décalés circonférentiellement par rapport au disque, les phototransistors et les orifices du collimateur étant répartis en correspondance en deux séries. Cette dernière disposition permet de diminuer de manière sensible le diamètre du disque codé.

D'autres avantages et caractéristiques de l'invention ressortiront à la lecture de la description suivante faite à titre d'exemple non limitatif et en référence aux dessins annexés dans lesquels :
la figure 1 est une vue latérale schématique d'un haut de colonne de direction équipé du capteur d'angle absolu selon la présente invention ;
la figure 2 est une vue éclatée en perspective du boîtier sans son couvercle, du circuit imprimé, des dispositifs optiques et électroniques, du dispositif de verrouillage et du dispositif de rattrapage de jeux ;
la figure 3 est une vue en perspective de l'intérieur du boîtier, le couvercle ayant été enlevé par souci de clarté ;
la figure 4 est une vue en perspective, vue par le dessous, du capteur selon l'invention ;
la figure 5 est une vue en coupe du système d'illumination du disque de codage et du dispositif de détection des informations relatives à la valeur absolue de l'angle du volant dans un tour ; et
la figure 6 est une vue en coupe du dispositif de comptage des tours du volant.

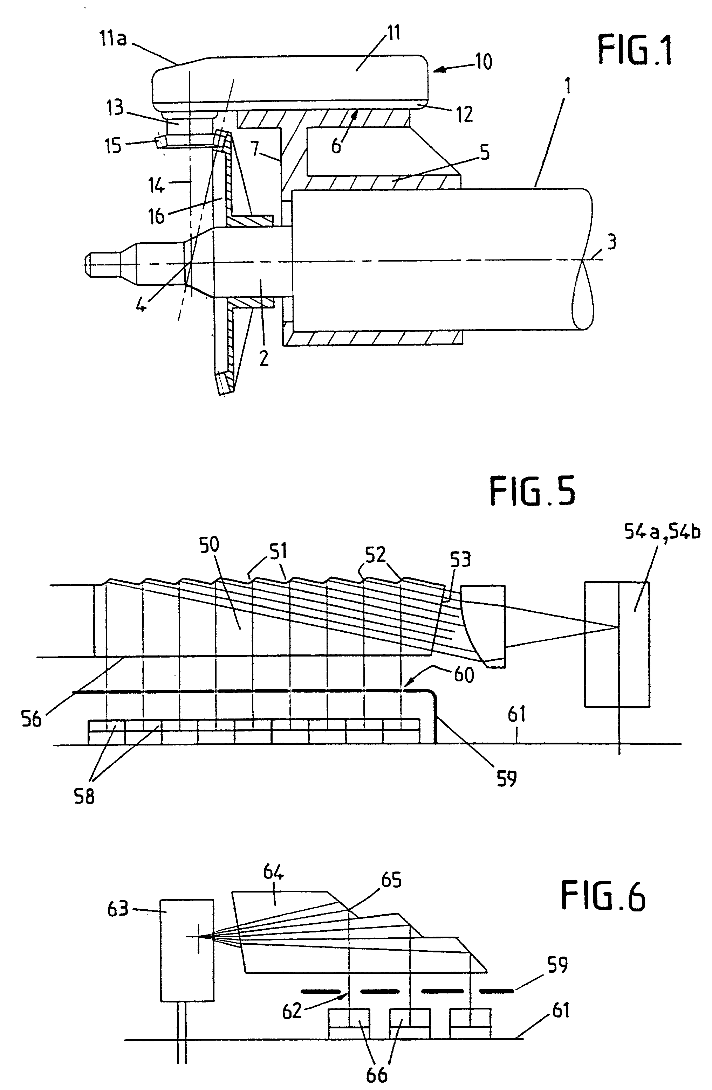

La figure 1 montre un tube 1 de colonne de direction de véhicule, traversé par un arbre de direction 2 d'axe 3 dont l'extrémité 4, sortant du tube 1, s'emmanche dans l'orifice central d'un volant non montré sur le dessin.

Le tube 1 supporte un bloc 5 de haut de colonne de direction sur lequel sont montés des dispositifs de commutation d'essuyage et d'éclairage non visibles sur le dessin, ainsi qu'un capteur 10 d'angle absolu de la rotation du volant.

Le capteur 10 comporte un boîtier 11 renversé de forme globalement parallélépipédique et dont l'ouverture inférieure est obturée par un couvercle 12 en appui sur la face supérieure 6 du bloc 5.

Le boîtier 11 s'étend sensiblement parallèlement à l'axe de rotation 3 du volant et présente une partie avant 11a située en regard de l'extrémité 4 de l'arbre de direction, entre le plan définissant la face arrière 7 et le plan du volant.

Un arbre 13, d'axe 14 perpendiculaire à l'axe 3, est monté rotatif dans la partie avant 11a du boîtier 11. Cet arbre 13 présente en dessous de la face inférieure du couvercle 12 un pignon conique 15, d'axe 14, dont la denture engrène avec la denture d'une couronne conique 16 d'axe 3, fixée sur l'extrémité 4 de l'arbre de direction 2.

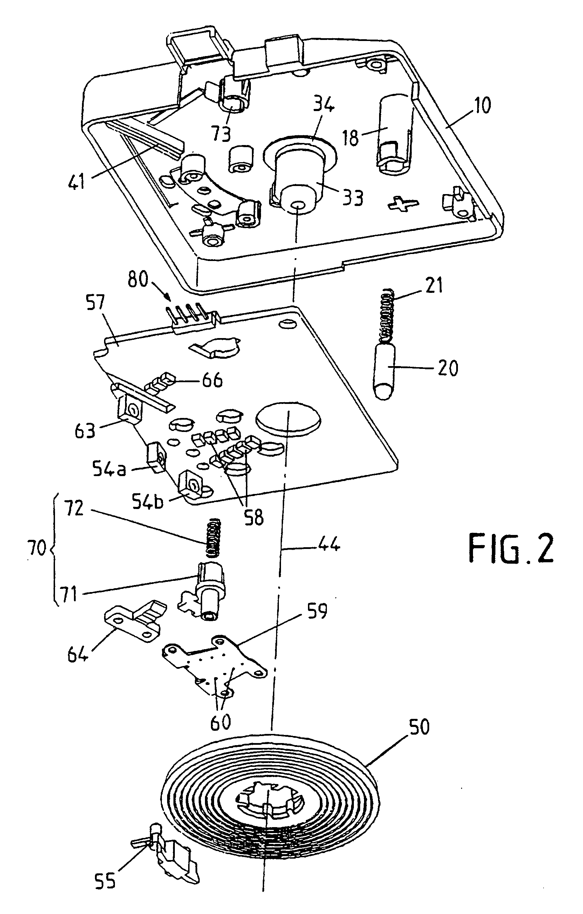

Ainsi que cela est visible sur les figures 2 à 4, les figures 3 et 4 montrant le boîtier 11 dans une position retournée, l'arbre 13 présente, à son extrémité opposée au pignon conique 15, un pignon droit 17. Cet ensemble, arbre 13 et pignons 15 et 17, réalisé en une seule pièce, comporte du côté du pignon droit 17 un alésage borgne pour son montage sur un tourillon 18 d'axe 14 formé sur la face interne du boîtier 11. Le couvercle 12 présente en regard du tourillon 18 un alésage 19 qui, associé au tourillon 18, constitue un guidage pivot glissant pour l'arbre 13. Par ailleurs, le tourillon 18 est creux et sert de logement à un plongeur 20 chargé par un ressort 21. L'ensemble, plongeur 20 et ressort 21, repousse l'arbre 13 vers l'extérieur du boîtier 11, ce qui a pour effet de plaquer le pignon conique 15 sur la couronne 16. De ce fait, les jeux et défauts de concentricité de la couronne dentée 16 sont rattrapés. Une butée axiale, non montrée sur les dessins, évite que l'ensemble constitué par l'arbre 13 et ses pignons 15, 17 ne ressorte complètement du boîtier 11, lorsque le capteur 10 n'est pas assemblé sur un bloc 5 haut de colonne.

Le pignon droit 17 engrène sur la denture périphérique 30 d'un moyeu 31 qui comporte un plateau annulaire 32 entourant un essieu central non visible sur les dessins. L'essieu central pivote autour d'un fût fixe 33 qui s'étend à partir de la face interne du boîtier 11. Le moyeu 31 est guidé axialement sur deux godrons 34 faisant respectivement partie du boîtier 11 et du couvercle 12. La hauteur de la denture 30 est inférieure à la hauteur, dans la direction de l'axe 14, de la denture du pignon droit 17 de manière à assurer l'engrènement, quelle que soit la position axiale de l'arbre 13.

Le rapport de réduction entre l'arbre 13 et le moyeu 31 est inverse du rapport de réduction entre la couronne dentée 16 et l'arbre 13. De cette manière, à un tour de volant correspond un tour du moyeu 31.

Sur la face du plateau 32, située en vis-à-vis de la face interne du couvercle 12, est gravée une spirale 35 composée de cinq spires équidistantes. Le nombre de spires peut être supérieure à cinq, si le capteur 10 est destiné à un véhicule dont le nombre de tours du volant est supérieur à 5.

Un chariot 40 est monté coulissant à l'intérieur du boîtier 11, par l'intermédiaire de glissières 41 formées sur la face interne du boîtier 11, et d'une rainure 42 formée dans la paroi du couvercle 12 et dirigée vers l'axe de rotation 44 du moyeu 31. Ce chariot 40 porte un doigt ou pointeau 43 dont l'extrémité libre coopère avec la spirale 35. On conçoit ainsi que la rotation du moyeu 31 entraîne une translation du chariot 40 radialement par rapport au moyeu 31.

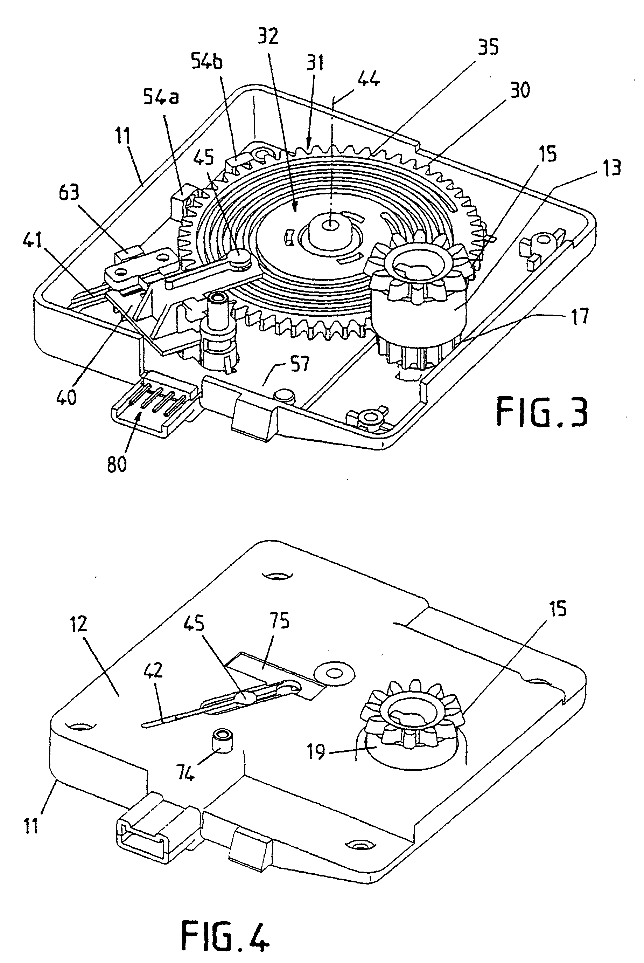

Un disque optique 50 est clipsé sur l'essieu central du moyeu 31. Ce disque optique 50, non visible sur les figures 3 et 4, est disposé entre le plateau 32 et la face interne du boîtier 11. Ce disque 50 comporte, sur sa face en regard du moyeu 31, neuf saignées ou sillons concentriques 51 d'axe 44 dont une face 52 est inclinée de 51° par rapport à la verticale parallèle à l'axe 44. Ce disque 50 est en outre éclairé par sa tranche périphérique 53 par deux LED, 54a, 54b qui émettent un faisceau de lumière infrarouge radialement dans la direction de la tranche 53. Des doubles lentilles 55 sont interposées entre les LED 54a, 54b et la tranche 53, afin de redresser le faisceau lumineux dans deux plans. Ce faisceau pénètre ensuite dans l'épaisseur du disque 50 sous un angle de 12°. Les faces 52 des sillons 51 divisent le faisceau lumineux incident en 9 faisceaux parallèles à l'axe 44 qui viennent frapper la face opposée 56 du disque 50. Cette face 56 est équipée d'une sérigraphie représentant un codage en code de Gray de l'angle absolu du disque 50 qui est égal à l'angle absolu du volant dans un tour. Ce code comporte notamment des zones opaques qui ne laissent pas passer la lumière infrarouge.

Les LED 54a et 54b sont montés sur un circuit imprimé 57 interposé entre le disque 50 et le boîtier 11. Ce circuit imprimé 57 comporte en outre neuf phototransistors 58 répartis en deux rangs respectivement devant les neuf faisceaux lumineux réfléchis par les faces 52. Un collimateur 59 comportant neuf orifices calibrés 60 dans l'axe des neuf faisceaux lumineux est interposé entre le disque 50 et le circuit imprimé 57. Cinq phototransistors 58 sont susceptibles d'être éclairés par le LED 54a et quatre phototransistors sont susceptibles d'être éclairés par le LED 54b.

Le chariot 40 supporte une plaque codée 61, visible sur la figure 6, qui se déplace, en même temps que le chariot dans une direction perpendiculaire au plan de la figure 6. La plaque codée 61 comporte des ouvertures 62 réparties longitudinalement sur trois rangées et des parties opaques, afin de permettre de coder sur trois bits, soit 8 combinaisons, les cinq tours autorisés par le capteur 10. On a donc un changement de code tous les 5/8 tours du volant, c'est-à-dire tous les 225°. Le système permettant le comptage du nombre de tours du volant comporte un troisième LED 63 monté sur le circuit imprimé 57. Ce LED 63 illumine à travers un prisme 64 comportant trois facettes réflectrices 65 disposées en regard des cheminements des orifices 62 de la plaque codée 61 et de trois phototransistors 66 montés sur le circuit imprimé 57. La plaque codée 61 est disposée entre le prisme 64 et le circuit imprimé 57. Le prisme 64 est disposé transversalement sur le chemin de translation de la plaque codée 61.

A chaque valeur du codage détectée par les LED 66 correspond une rotation possible du volant sur un secteur de 225°.

L'intérêt de coder 8 secteurs de 225° au lieu de coder cinq tours de 360°, est de permettre de s'affranchir des erreurs de synchronisation entre le dispositif de codage de l'angle du volant dans un tour et le dispositif de comptage du nombre de tours du volant. En effet, dans le cas ou l'on code directement le nombre de tours, il est peu probable que le passage du tour N au tour N + 1 s'effectue rigoureusement entre 359° et 1° d'angle du volant, même si la mesure de cet angle est très précise. Il serait alors possible d'avoir une erreur de 360° à la mise sous tension du véhicule, si d'aventure il se trouve dans cette configuration. Par contre, si le codage s'effectue par secteur de 225° (5/8 tours), il est possible de lever cette ambiguïté en corrélant le numéro de secteur fourni par les trois phototransistors 66 et la valeur de l'angle du volant, fournie par les neuf phototransistors 58.

Pour ce faire, on opère de la manière suivante :
soit
- A: l'angle lu sur le disque optique 50 en degrés
- S: le numéro du secteur détecté
- T: le numéro du tour de volant à définir ;
si S = 1 alors T = 1
si S = 2 et 160<A<360 alors T = 1
si S = 2 et 0<A<155 alors T = 2
si S = 3 alors T = 2
si S = 4 et 250<A<360 alors T = 2
si S = 4 et 0<A<245 alors T = 3
si S = 5 et 115<A<360 360 alors T = 3
si S = 5 et 0<A<110 alors T = 4
si S = 6 alors T = 4
si S = 7 et 205<A<360 alors T = 4
si S = 7 et et 0<A<200 alors T = 5
si S = 8 alors T = 5

Le capteur 10 comporte en outre un dispositif de verrouillage 70 en position "roues droites" qui immobilise le moyeu 31 et le chariot 40 dans leurs positions médianes, tant que le capteur 10 n'est pas monté sur un véhicule ou que ce capteur 10 est déposé dans le cas d'une opération de maintenance.

Ce dispositif de verrouillage 70 comporte un doigt 71 armé par un ressort 72 monté rotatif sur un tourillon 73 formé sur la face interne du boîtier 11. L'extrémité libre 74 du doigt 71 émerge sous la face interne du couvercle 12 sous l'action du ressort 72, tant que le capteur 10 n'est pas appliqué sur la face supérieure 6 du bloc 5 de haut de colonne. Le doigt 71 comporte une dent de crémaillère venant bloquer le moyeu 31 ainsi qu'un ergot qui s'engage dans une encoche pratiquée dans le chariot 40. Lorsque l'extrémité libre 74 est rentrée dans le couvercle 12, la dent de crémaillère et l'ergot sont effacés et ne coopèrent pas avec la denture du moyen et l'encoche du chariot. Une fenêtre 75 est ménagée dans la paroi du couvercle 12 pour permettre la vision d'un index imprimé sur le moyeu 31 et correspondant à l'angle de valeur 0 du moyeu 31. Lorsque le capteur 10 est verrouillé en position "roues droites", l'opérateur peut déverrouiller le capteur 10 en enfonçant l'extrémité 74 du doigt 71, et il peut faire tourner le moyeu 31 en faisant tourner manuellement le pignon conique 19.

Le circuit imprimé 57, fixé au boîtier 11 comporte en outre une pluralité d'ouvertures pour le passage du fût 33, du tourillon 73 et des moyens de fixation du collimateur 59 et du prisme 64, ainsi qu'un connecteur 80 pour sa liaison a un calculateur embarqué sur le véhicule.

## Revendications

1. Capteur d'angle absolu de la rotation du volant d'un véhicule comportant un dispositif de comptage des tours du volant et un dispositif de mesure de l'angle du volant dans un tour, qui délivrent des informations sur la position du volant dès la mise sous tension du véhicule, lesdits dispositifs comportant un organe d'entrée entraîné en rotation par une couronne dentée (16) solidaire du volant ou de l'arbre de direction (2),
**caractérisé par le fait que** le dispositif de comptage des tours du volant et le dispositif de mesure de l'angle du volant sont logés dans un boîtier (11, 12) susceptible d'être monté sur le bloc (5) haut de colonne de direction dudit véhicule parallèlement à l'arbre de direction (2),
**par le fait que** l'organe d'entrée comporte un arbre (13) monté rotatif dans le boîtier (11, 12) et présentant, à l'extérieur dudit boîtier (11, 12) un pignon conique (15) apte à engrener avec la couronne dentée (16) également conique et, à l'intérieur dudit boîtier, un pignon droit (17),
**par le fait que** le dispositif de mesure de l'angle du volant comporte un moyeu (31) monté rotatif dans ledit boîtier (11, 12) et engrenant avec ledit pignon droit (17) par un denture (30), un disque codé (50) lié en rotation audit moyeu (31) et des détecteurs (59) pour la lecture du disque codé (50), et
**par le fait que** le dispositif de comptage des tours comporte un élément mobile (40) déplacé par la rotation dudit moyeu (31), une plaque codée (61) solidaire de l'élément mobile (40) et des détecteurs (66) pour la lecture de la plaque codée.

2. Capteur selon la revendication 1, **caractérisé par le fait que** l'arbre (13) est monté sur le boîtier (11, 12) avec interposition d'un dispositif de rattrapage de jeux.

3. Capteur selon la revendication 2, **caractérisé par le fait que** le dispositif de rattrapage de jeux comporte un plongeur (20) chargé par un ressort (21) et logeant dans l'alésage d'un tourillon (18) formé dans le boîtier (11) et servant de guidage en rotation à l'arbre (13), et **par le fait que** le pignon droit (17) a une épaisseur supérieure à l'épaisseur de la denture (30) du moyeu (31).

4. Capteur selon l'une des revendications 1 à 3, **caractérisé par le fait qu'**il comporte en outre un dispositif de verrouillage susceptible de bloquer l'élément mobile (40) et le moyeu (31) dans la position "roues droites", lorsque le boîtier (11, 12) est désolidarisé du bloc (5) haut de colonne.

5. Capteur selon la revendication 4, **caractérisé par le fait que** le dispositif de verrouillage comporte un doigt (71) chargé par un ressort (72) et dont une extrémité (74) est susceptible de sortir du boîtier (11, 12) par une surface normalement en contact avec le bloc (5) haut de colonne, ce doigt (71) comportant une dent de crémaillère venant bloquer le moyeu (31) et un ergot s'engageant dans une encoche pratiquée dans l'élément mobile (40).

6. Capteur selon l'une quelconque des revendications 1 à 5, **caractérisé par le fait que** l'élément mobile du dispositif de comptage des tours du volant comporte un chariot (40) monté coulissant dans le boîtier (11, 12) dans le sens radial du moyeu (31), ce chariot (40) portant un pointeau (45) coopérant avec une rainure (35) en spirale ménagée sur une face du moyeu (31).

7. Capteur selon la revendication 6, **caractérisé par le fait que** la plaque codée (61) est interposée entre un ensemble de trois phototransistors (66) et un prisme éclairé par 1 LED (53) et ayant trois facettes (65) réfléchissantes disposées en regard des phototransistors (66) dans une direction perpendiculaire aux directions de déplacement du chariot (40), ladite plaque codée (61) comportant des ouvertures (62) et des parties opaques, afin de permettre de différencier huit secteurs de rotation du volant.

8. Capteur selon l'une quelconque des revendications 1 à 7, **caractérisé par le fait que** le disque codé (50) est en matière transparente et est éclairé par la tranche (53) par au moins 1 LED (54a, 54b), ledit disque (50) comportant sur l'une de ses faces des sillons (51) concentriques définissant des surfaces (52) réfléchissant la lumière reçue vers l'autre face (56) du disque (50), cette autre face comportant des zones laissant passer la lumière et des zones opaques, et **par le fait que** les détecteurs (59) sont des phototransistors disposés dans le trajet des flux lumineux réfléchis par les surfaces (52) réfléchissantes, et **par le fait qu'**un collimateur (59) fixe est interposé entre le disque (50) et les phototransistors (58).

9. Capteur selon la revendication 8, **caractérisé par le fait que** la tranche (53) du disque est éclairée par deux LED (54a, 54b) décalés circonférentiellement par rapport au disque (50), les phototransistors (58) et les orifices (60) du collimateur (59) étant répartis en correspondance en deux séries.

## Claims

1. Absolute angle sensor for the rotation of the steering wheel of a vehicle comprising a device for counting turns of the steering wheel and a device for measuring the angle of the steering wheel in a turn, which deliver information on the position of the steering wheel as soon as the vehicle is switched on, the said devices comprising an input member driven in rotation by an annular gear (16) fixed to the steering wheel or to the steering shaft (2),
**characterised by** the fact that the device for counting the turns of the steering wheel and the device for measuring the angle of the steering wheel are housed in a casing (11, 12) able to be mounted on the steering column top block (5) of the said vehicle parallel to the steering shaft (2),
by the fact that the input member comprises a shaft (13) mounted so as to rotate in the casing (11, 12) and having, outside the said casing (11, 12), a conical pinion (15) able to mesh with the annular gear (16), also conical, and, inside the said casing, a spur pinion (17),
by the fact that the device for measuring the angle of the steering wheel comprises a hub (31) mounted so as to rotate in the said casing (11, 12) and meshing with the said spur pinion (17) by means of teeth (30), a coded disc (50) rotationally connected to the said hub (31) and detectors (59) for reading the coded disc (50), and
by the fact that the turn counting device comprises a movable element (40) moved by the rotation of the said hub (31), a coded plate (61) fixed to the movable element (40) and detectors (66) for reading the coded plate.

2. Sensor according to Claim 1, **characterised by** the fact that the shaft (13) is mounted on the casing (11, 12) with the interposing of a play take-up device.

3. Sensor according to Claim 2, **characterised by** the fact that the play take-up device comprises a plunger (20) loaded by means of a spring (21) and housed in the bore of a journal (18) formed in the casing (11) and serving for the rotational guidance of the shaft (13), and by the fact that the spur pinion (17) has a thickness greater than the thickness of the teeth (30) of the hub (31).

4. Sensor according to one of Claims 1 to 3, **characterised by** the fact that it also comprises a locking device able to lock the movable element (40) and the hub (31) in the "straight wheel" position, when the casing (11, 12) is disconnected from the column top block (5).

5. Sensor according to Claim 4, **characterised by** the fact that the locking device comprises a finger (71) loaded by means of a spring (72) and one end (74) of which is able to emerge from the casing (11, 12) through a surface normally in contact with the column top block (5), this finger (71) comprising a rack tooth locking the hub (31) and a toe engaging in a notch formed in the movable element (40).

6. Sensor according to any one of Claims 1 to 5, **characterised by** the fact that the movable element of the device for counting turns of the steering wheel comprises a carriage (40) mounted so as to slide in the casing (11, 12) in the radial direction of the hub (31), this carriage (40) carrying a needle (45) cooperating with a spiral groove (35) formed on one face of the hub (31).

7. Sensor according to Claim 6, **characterised by** the fact that the coded plate (61) is interposed between a set of three phototransistors (66) and a prism illuminated by one LED (53) and having three reflective facets (65) disposed opposite the phototransistors (66) in a direction perpendicular to the directions of movement of the carriage (40), the said coded plate (61) comprising openings (62) and opaque parts, to make it possible to differentiate eight sectors of rotation of the steering wheel.

8. Sensor according to any one of Claims 1 to 7, **characterised by** the fact that the coded disc (50) is made from transparent material and is illuminated through the edge (53) by at least one LED (54a, 54b), the said disc (50) comprising on one of its faces concentric grooves (51) defining surfaces (52) reflecting the light received towards the other face (56) of the disc (50), this other face comprising areas allowing the light to pass and opaque areas, and by the fact that the detectors (59) are phototransistors disposed in the path of the light fluxes reflected by the reflective surfaces (52), and by the fact that a fixed collimator (59) is interposed between the disc (50) and the phototransistors (58).

9. Sensor according to Claim 8, **characterised by** the fact that the edge (53) of the disc is illuminated by two LEDs (54a, 54b) offset circumferentially with respect to the disc (50), the phototransistors (58) and the orifices (60) of the collimator (59) being distributed in correspondence in two series.

## Patentansprüche

1. Absolut-Drehgeber für die Drehung des Lenkrads eines Kraftfahrzeugs mit einer Zählvorrichtung zum Zählen der Lenkradumdrehungen und mit einer Meßvorrichtung zum Messen des Lenkradwinkels in einer Umdrehung, die Informationen über die Lenkradposition unmittelbar nach dem Starten des Fahrzeugs liefern, wobei die besagten Vorrichtungen ein Eingangsorgan umfassen, das durch einen fest mit dem Lenkrad oder mit der Lenkwelle (2) verbundenen Zahnkranz (16) drehend angetrieben wird,
**dadurch gekennzeichnet, daß** die Zählvorrichtung zum Zählen der Lenkradumdrehungen und die Meßvorrichtung zum Messen des Lenkradwinkels in einem Gehäuse (11, 12) gelagert sind, das am oberen Block (5) der Lenksäule des besagten Fahrzeugs parallel zur Lenkwelle (2) eingebaut werden kann, daß das Eingangsorgan eine Welle (13) umfaßt, die drehbar im Gehäuse (11, 12) gelagert ist und außerhalb des besagten Gehäuses (11, 12) ein Kegelrad (15), das mit dem ebenfalls konischen Zahnkranz (16) ineinandergreifen kann, und im Innern des besagten Gehäuses ein Stirnrad (17) aufweist,
daß die Meßvorrichtung zum Messen des Lenkradwinkels eine Nabe (31), die drehbar in dem besagten Gehäuse (11, 12) gelagert ist und mit dem besagten Stirnrad (17) durch eine Zahnung (30) ineinandergreift, eine drehfest mit der besagten Nabe (31) verbundene Codierscheibe (50) und Detektoren (59) zum Ablesen der Codierscheibe (50) umfaßt und
daß die Zählvorrichtung zum Zählen der Umdrehungen ein durch die Drehung der besagten Nabe (31) verschobenes bewegliches Element (40), eine fest mit dem beweglichen Element (40) verbundene Codierplatte (61) und Detektoren (66) zum Ablesen der Codierplatte umfaßt.

2. Geber nach Anspruch 1, **dadurch gekennzeichnet, daß** die Welle (13) unter Einfügung einer Spielausgleichvorrichtung am Gehäuse (11, 12) gelagert ist.

3. Geber nach Anspruch 2, **dadurch gekennzeichnet, daß** die Spielausgleichvorrichtung einen durch eine Feder (21) beaufschlagten Stößel (20) umfaßt, der in der Bohrung eines im Gehäuse (11) ausgebildeten und als Drehführung für die Welle (13) dienenden Lagerzapfens (18) gelagert ist, und daß das Stirnrad (17) eine Dicke hat, die größer als die Dicke der Zahnung (30) der Nabe (31) ist.

4. Geber nach einem der Ansprüche 1 bis 3, **dadurch gekennzeichnet, daß** er außerdem eine Sperrvorrichtung umfaßt, die in der Lage ist, das bewegliche Element (40) und die Nabe (31) in der der "Geradeausstellung der Räder" entsprechenden Position zu sperren, wenn das Gehäuse (11, 12) vom oberen Lenksäulenblock (5) getrennt ist.

5. Geber nach Anspruch 4, **dadurch gekennzeichnet, daß** die Sperrvorrichtung einen durch eine Feder (72) beaufschlagten Finger (71) umfaßt, von dem ein Ende (74) in der Lage ist, aus dem Gehäuse (11, 12) durch eine Fläche auszutreten, die sich normalerweise mit dem oberen Lenksäulenblock (5) in Kontakt befindet, wobei dieser Finger (71) einen Zahnstangenzahn, der die Nabe (31) sperrt, und eine Nase umfaßt, die in eine in das bewegliche Element (40) eingearbeitete Ausnehmung eingreift.

6. Geber nach einem der Ansprüche 1 bis 5, **dadurch gekennzeichnet, daß** das bewegliche Element der Zählvorrichtung zum Zählen der Lenkradumdrehungen einen Schlitten (40) umfaßt, der im Gehäuse (11, 12) in der radialen Richtung der Nabe (3) verstellbar gelagert ist, wobei dieser Schlitten (40) einen Stift (45) trägt, der mit einer in eine Fläche der Nabe (31) eingearbeiteten spiralförmigen Nut (35) zusammenwirkt.

7. Geber nach Anspruch 6, **dadurch gekennzeichnet, daß** die Codierplatte (61) zwischen einer Gruppe von drei Phototransistoren (66) und einem durch 1 LED (53) beleuchteten Prisma eingefügt ist, das drei reflektierende Teilflächen (65) aufweist, die gegenüber den Phototransistoren (66) in einer Richtung senkrecht zu den Verstellrichtungen des Schlittens (40) angeordnet sind, wobei die besagte Codierplatte (61) Öffnungen und lichtundurchlässige Teile umfaßt, um die Unterscheidung von acht Drehsektoren des Lenkrads zu ermöglichen.

8. Geber nach einem der Ansprüche 1 bis 7, **dadurch gekennzeichnet, daß** die Codierscheibe (50) aus einem transparenten Werkstoff ausgeführt ist und durch die Kante (53) durch wenigstens 1 LED (54a, 54b) beleuchtet wird, wobei die besagte Scheibe (50) auf einer ihrer Flächen konzentrische Furchen (51) umfaßt, die Oberflächen (52) definieren, welche das empfangene Licht zur anderen Fläche (56) der Scheibe (50) reflektieren, wobei diese andere Fläche das Licht durchlassende Stellen und lichtundurchlässige Stellen umfaßt, und daß es sich bei den Detektoren (59) um Phototransistoren handelt, die in der Bahn der durch die reflektierenden Oberflächen reflektierten Lichtströme angeordnet sind, und daß ein ortsfester Kollimator (59) zwischen der Scheibe (50) und den Phototransistoren (58) eingefügt ist.

9. Geber nach Anspruch 8, **dadurch gekennzeichnet, daß** die Kante (53) der Scheibe durch zwei im Verhältnis zur Scheibe (50) in Umfangsrichtung versetzte LEDs (54a, 54b) beleuchtet wird, wobei die Phototransistoren (58) und die Öffnungen (60) des Kollimators (59) in Übereinstimmung zueinander auf zwei Reihen verteilt sind.
